# EUROPEAN PATENT APPLICATION

(11) **EP 2 610 832 A2**
(43) Date of publication of application: **03.07.2013**
(21) Application number: 12004184.3
(22) Date of filing: 31.05.2012
(51) Int. Cl.: G08B 21/14, G01N 1/22

(54) **Dynamic alarm generation method of biological particle monitor**

(30) Priority: 27.12.2011 KR 20110143058
(71) Applicant: Agency For Defense Development, Yuseong-gu, Daejeon 305-152 (KR)
(72) Inventor: Choi, Kibong, Yucheon-dong Jung-gu Daejeon (301-140) (KR); Ha, Yeonchul, Seo-gu Daejeon (302-280) (KR); Lee, Jaekyung, Anyang-si Gyeonggi-do (430-040) (KR); Jun, Hanok, Anyang-si Gyeonggi-do (430-040) (KR)
(74) Representative: Herrmann, Uwe

(57) **Abstract**

A dynamic alarm generation method of a biological particle monitor according to the present invention includes the steps of: (a) receiving particle information[i] from the biological particle monitor; (b) calculating an effective biological particle[i] and an upper bound[i] of the effective biological particle from the particle information[i]; (c) calculating a moving sum[i] of the number of times exceeding a relative concentration, a moving sum[i] of the number of times exceeding a long-term low concentration, and a moving sum[i] of the number of times exceeding a short-term high concentration from the upper bound[i] of the effective biological particle; (d) determining whether or not the moving sum[i] of the number of times exceeding the relative concentration, the moving sum[i] of the number of times exceeding the long-term low concentration, and the moving sum[i] of the number of times exceeding the short-term high concentration respectively exceed a relative concentration alarm criterion[i], a long-term low concentration exceeding time, and a short-term high concentration exceeding time; and (e) generating a corresponding alarm if it is determined that any one of the relative concentration alarm criterion[i], the long-term low concentration exceeding time, and the short-term high concentration exceeding time is exceeded, and steps (a) to (e) are repeated every unit time.

## Description

### BACKGROUND OF THE INVENTION

### Field of the Invention

The present invention relates to a dynamic alarm generation method of a biological particle monitor, and more particularly, to a dynamic alarm generation method of a biological particle monitor, which can minimize generation of false alarms even when the number of dust particles floating in the air is large or a time variation thereof is high.

### Background of the Related Art

A biological particle monitor takes in particles floating in the air, analyzes scattering light and fluorescence generated when the particles pass through laser beams, and monitors the number of biological particles in the air in real-time based on the result of the analysis. Conventional biological particle monitors use a method of generating an alarm based on absolute concentration of fluorescent particles or a ratio of the fluorescent particles to total particles. In such a conventional biological particle monitor, if the number of dust particles floating in the air is large or a time variation thereof is high, false alarms are easy to be generated. In addition, the conventional biological particle monitor cannot measure changes in biological particles of a low concentration if the number of dust particles floating in the air is large. Therefore, required is an alarm generation method of the biological particle monitor, which can monitor whether or not biological agents are sprayed, by comparing the number of analyzed biological particles with an alarm criterion, and minimize generation of the false alarms.

### SUMMARY OF THE INVENTION

Accordingly, the present invention has been made in view of the above-mentioned problems occurring in the prior art, and it is an object of the present invention to provide a biological particle monitor which can minimize generation of false alarms even when the number of dust particles floating in the air is large or a time variation thereof is high.

To accomplish the above object, according to an aspect of the present invention, there is provided a dynamic alarm generation method of a biological particle monitor, the method comprising the steps of: (a) receiving particle information[i] from the biological particle monitor; (b) calculating an effective biological particle[i] and an upper bound[i] of the effective biological particle from the particle information[i]; (c) calculating a moving sum[i] of the number of times exceeding a relative concentration, a moving sum[i] of the number of times exceeding a long-term low concentration, and a moving sum[i] of the number of times exceeding a short-term high concentration from the upper bound[i] of the effective biological particle; (d) determining whether or not the moving sum[i] of the number of times exceeding the relative concentration, the moving sum[i] of the number of times exceeding the long-term low concentration, and the moving sum[i] of the number of times exceeding the short-term high concentration respectively exceed a relative concentration alarm criterion[i], a long-term low concentration exceeding time, and a short-term high concentration exceeding time; and (e) generating a corresponding alarm if it is determined that any one of the relative concentration alarm criterion[i], the long-term low concentration exceeding time, and the short-term high concentration exceeding time is exceeded. The steps (a) to (e) are repeated every unit time and preferably repeated every second.

The particle information received includes scattering light, short wavelength fluorescence and long wavelength fluorescence. The effective biological particle[i] is defined as effective fluorescence[i] - effective scattering[i] × average fluorescence index[i]. The effective scattering is defined by particles of a certain size or larger among particles detected by the biological particle monitor. The effective fluorescence is defined by effective scattering having short wavelength fluorescence and long wavelength fluorescence of a certain intensity or higher among the effective scattering. The average fluorescence index is defined as a ratio of the effective fluorescence to the effective scattering.

A relative concentration excess[i] is defined as a case where the effective biological particle[i] exceeds the upper bound[i-1] of the effective biological particle and an average effective biological particle[i] is larger than 1.

A long-term low concentration excess[i] is defined as a case where the effective biological particle[i] is larger than a long-term low concentration criterion of the effective biological particle. The long-term low concentration criterion of the effective biological particle is a user-defined variable.

A short-term high concentration excess[i] is defined as a case where the effective biological particle[i] is larger than a short-term high concentration criterion of the effective biological particle. The short-term high concentration criterion of the effective biological particle is a user-defined variable.

According to an embodiment of the present invention, the data received in step (a) includes weather information[i] received from meteorological equipment, and weighting factors corresponding to changes in external factors such as changes of weather are assigned to the relative concentration alarm criterion[i].

### BRIEF DESCRIPTION OF THE DRAWINGS

FIG. 1 is a flowchart schematically illustrating a dynamic alarm generation method of a biological particle monitor of the present invention.

FIG. 2 is a detailed flowchart illustrating the step in FIG. 1 of calculating an upper bound of an effective biological particle.

FIG. 3 is a detailed flowchart illustrating the step in FIG. 1 of determining whether or not a relative concentration alarm criterion is exceeded.

FIG. 4 is a flowchart illustrating the steps of calculating a relative concentration alarm criterion for generating a relative concentration alarm according to an embodiment of the present invention.

FIG. 5 is a detailed flowchart illustrating the step in FIG. 1 of determining whether or not a long-term low concentration alarm criterion is exceeded.

FIG. 6 is a detailed flowchart illustrating the step in FIG. 1 of determining whether or not a short-term high concentration alarm criterion is exceeded.

### DETAILED DESCRIPTION OF THE PREFERRED EMBODIMENT

In the present specification, it is understood that [i] denotes data at the current time point. For example, particle information[i] denotes particle information inputted at the current time point from a biological particle monitor. Accordingly, it is generally understood that [i-1] denotes a data immediately before the current data. If the particle information is received from the particle monitor every second, particle information [i-3] denotes particle information received three seconds before the current time point.

In addition, it is understood that a moving sum and a moving average used in this specification are a sum and an average calculated by taking an oldest variable away and adding a new variable along the flow of time. For example, a moving sum of variable P is a sum of values of variable P for a certain period of time, and a moving average of variable P is a value calculated by dividing the moving sum of variable P by a number corresponding to the time period. Describing in detail, a 20-second moving sum of variable P is P[i] + P [i-1] + ---- + P[i-19], and a 20-second moving average of variable P is {P[i] + P[i-1] + ---- + P[i-19]}/20.

Hereinafter, preferred embodiments of the present invention will be described with reference to the attached drawings.

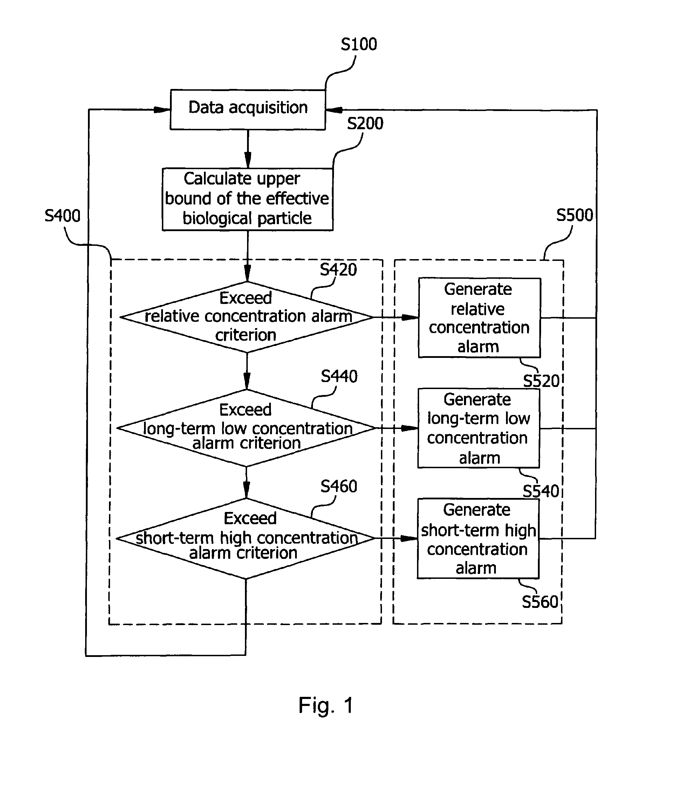

FIG. 1 is a flowchart schematically illustrating a dynamic alarm generation method of a biological particle monitor of the present invention.

Referring to FIG. 1, first, the dynamic alarm generation method of a biological particle monitor of the present invention receives particle information[i] from the biological particle monitor in step S100. The particle information received from the biological particle monitor includes scattering light, short wavelength fluorescence and long wavelength fluorescence, and these will de described later. It is preferable to receive the particle information at regular time intervals, and in the present invention, the particle information is received from the biological particle monitor every second. Accordingly, unless otherwise described, it is understood that [i-10] denotes 10 seconds before the current time point.

Subsequently, an upper bound[i] of an effective biological particle is calculated from the particle information[i] in step S200. The effective biological particle[i] defined as (effective fluorescence[i] - effective scattering[i] × average fluorescence index[i]) is calculated beforehand in order to obtain the upper bound[i] of the effective biological particle. The effective scattering[i] is defined by particles of a certain size or larger (preferably, 1 µm or larger) among particles detected by the biological particle monitor at the current time point. The effective fluorescence[i] is defined by effective scattering having short wavelength fluorescence and long wavelength fluorescence of a certain intensity or higher (the criterion may vary depending on situation, and this will be described later) among the effective scattering[i]. The average fluorescence index[i] is a moving average of fluorescence index[i] which is defined as a ratio of the effective fluorescence[i] to the effective scattering[i]. For example, if a 20-second moving average is used, the average fluorescence index[i] is a 20-second moving average of the fluorescence index[i]. If the effective biological particle[i] is calculated, an average effective biological particle[i] is calculated, and the average effective biological particle[i] is defined as a 20-second moving average of the effective biological particle[i]. The upper bound[i] of the effective biological particle is calculated from the average effective biological particle[i]. It is defined as upper bound[i] of effective biological particle = average effective biological particle[i] + confidence interval[i]. The confidence interval[i] is defined as confidence interval[i] - 1.96x{SQRT((20-second moving sum of variance[i])/19)}/SQRT(20), and the variance[i] is defined as variance[i] = deviation[i] × deviation[i]. The deviation[i] is defined as deviation[i] = average effective biological particle[i] - average(average effective biological particle[i]). Here, the average(average effective biological particle[i]) is a moving average of the average effective biological particle[i]. Although a 20-second moving average is adopted in the embodiment of the present invention, a 10-second moving average, a 30-second moving average, or the like may be used depending on situations, and it is not intended to limit the present invention to the 20-second moving average. The confidence interval is based on reliability of 95%, and its value will vary depending on the degree of reliability.

It is determined whether or not a concentration alarm criterion is exceeded in step S400 using the upper bound[i] of the effective biological particle calculated as described above. In an embodiment of the present invention, concentration alarms are classified into three categories of a relative concentration alarm, a long-term low concentration alarm, and a short-term high concentration alarm, and whether or not to generate an alarm is determined for each of these.

If it is determined that the concentration alarm criterion is exceeded in step S400, an alarm signal corresponding thereto is generated in step S500, and the process returns to the data acquisition step S100. If it is determined that the concentration alarm criterion is not exceeded, the process returns to the data acquisition step S100 without generating an alarm signal.

The entire procedure of steps S100 to S500 is repeated every unit time, and it is preferable to repeat the procedure every second.

<A preferred embodiment>

Hereinafter, a dynamic alarm generation method of the biological particle monitor according to a preferred embodiment of the present invention will be described.

Referring to FIG. 1, in the data acquisition step S100, particle information (scattering light, short wavelength fluorescence and long wavelength fluorescence) measured by the biological particle monitor every second is received. Although the biological particle monitor measures the particle information every second in the present invention, measurement intervals may be changed depending on situation. Concentration of biological particles varying with time is affected by wind direction and wind speed. Accordingly, in order to take into account the effects of weather conditions, weather information (wind direction and wind speed) is received from, for example, meteorological equipment. The wind direction and the wind speed are defined as an average direction and an average speed of wind measured every second. The scattering light is defined as light scattered and emitted from particles when strong light beams emitted from a light source (a laser or a lamp) of the particle monitor meet with fine particles. The fluorescence is generated by laser induced fluorescence of the biological particles, which is divided into short wavelength fluorescence and long wavelength fluorescence. The short wavelength fluorescence is fluorescence having a center wavelength of 435nm among fluorescence emitted from a single particle, and the long wavelength fluorescence is fluorescence having a center wavelength of 530nm among the fluorescence emitted from the single particle. The short wavelength fluorescence and the long wavelength fluorescence are divided into, for example, 16 levels depending on their intensity, and only the fluorescence having an intensity higher than a level determined as being meaningful among the levels is used as data. The level determined as being meaningful may be determined differently depending on environmental conditions or the like.

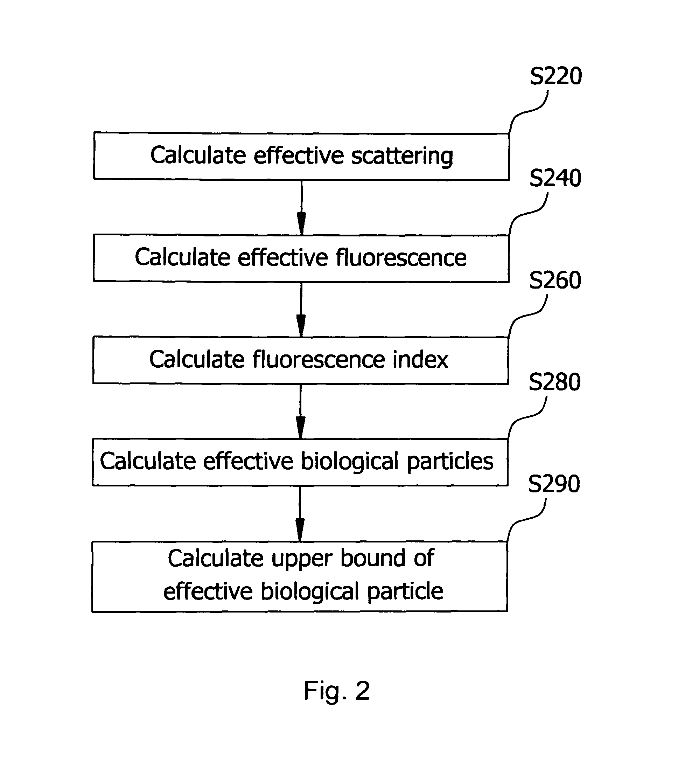

Next, an upper bound[i] of the effective biological particle is calculated from the particle information[i] in step S200. FIG. 2 is a detailed flowchart illustrating the step in FIG. 1 of calculating an upper bound of an effective biological particle. Hereinafter, the step of calculating an upper bound of an effective biological particle will be described with reference to FIG. 2.

First, in step S220, the number of effective scatterings[i] is calculated. The effective scattering is defined by particles of 1 µm or larger, which are the target of analysis among the particles of various sizes detected by the biological particle monitor, and the particle size may be acquired from the intensity of the scattering light.

Subsequently, in step S240, the number of effective fluorescence[i] is calculated. The effective fluorescence is defined by particles having short wavelength fluorescence and long wavelength fluorescence with an intensity of a certain level or higher among the particles defined as the effective scattering, and its criterion may vary depending on situation.

In step S260, a fluorescence index[i] is calculated. The fluorescence index is defined as a ratio of the number of effective scatterings to the number of effective fluorescence in the particles floating in the air (fluorescence index = effective fluorescence/effective scattering). If the effective scattering is zero, the effective fluorescence is defined as zero. Since the particle information is inputted every second in the embodiment, the fluorescence index is also calculated by the unit of one second. However, the present invention is not limited thereto, but the fluorescence index may be calculated by a certain time unit.

In step S280, an effective biological particle[i] is calculated. The effective biological particle[i] is defined as effective fluorescence[i] - effective scattering[i] × average fluorescence index[i]. The effective scattering[i] and the effective fluorescence[i] are already calculated in steps S220 and S240, and an average fluorescence index[i] is calculated as shown below. As is described below, although preferred embodiments of the present invention are described with specific values, this is only for an exemplary purpose, and the present invention is not limited thereto.

Calculation of average fluorescence index

An average fluorescence index is calculated by dividing the data acquired from the particle monitor into four sections of (1) C≤7, (2) 7<C≤60, (3) 60<C≤120, and (4) C>120 depending on the number C of data.

(1) When C<7

The average fluorescence index[i] is defined as 0.

(2) When 7<C≤60

The average fluorescence index[i] in section (2) is defined as an average of all previous fluorescence indexes[i] at the current time point (i).

Average fluorescence index[i] = {fluorescence index[i] + ---- + fluorescence index[1]}/i

(3) When 60<C≤120

The average fluorescence index[i] in section (3) is defined as the average fluorescence index[59] at 59 seconds.

Average fluorescence index[i] = average fluorescence index [59]

(4) When C>120

If an alarm is not generated within 120 seconds from the current time point, a 60-second moving average is taken as the average fluorescence index[i] at a time point 60 seconds before the current time point (i).

Average fluorescence index[i] = {fluorescence index[i-120] + ---- + fluorescence index[i-61] }/60

If an alarm is generated within 120 seconds from the current time point, the average fluorescence index[t] at the time point[t] where the alarm has been generated is maintained for 120 seconds. At this point, although a new alarm is generated, the average fluorescence index[t] is maintained, and it returns to the average fluorescence index[i] of the current time point after 120 seconds are passed.

Calculation of upper bound of effective biological particle

Using the effective biological particle[i] calculated in step S280, an upper bound[i] of the effective biological particle is calculated in step S290. The upper bound[i] of the effective biological particle is calculated by dividing acquired data into three sections depending on the number C of data.

(1) C<25

The upper bound[i] of the effective biological particle is defined as 0.

(2) C≥25

The upper bound[i] of the effective biological particle is defined as upper bound[i] of effective biological particle = average effective biological particle[i] + confidence interval[i]. The confidence interval[i] is defined as confidence interval[i] = 1.96 × {SQRT(20-second moving sum of variance[i])} / SQRT(20), and the variance[i] is defined as variance[i] = deviation[i] × deviation[i]. The deviation[i] is defined as deviation[i] = average effective biological particle[i] - average(average effective biological particle[i]). The value of the confidence interval may vary depending on the degree of reliability as described above. In the section of C≥25, the average effective biological particle[i] is defined as follows:

Average effective biological particle[i] = 20-second moving average of effective biological particle[i] = {effective biological particle[i] + ---- + effective biological particle[i-19] }/20

Hereinafter, the step S400 of determining whether or not an alarm criterion is exceeded according to an embodiment of the present invention will be described. In the present invention, alarm criteria are classified into three categories of a relative concentration alarm criterion, a long-term low concentration alarm criterion, and a short-term high concentration alarm criterion. The relative concentration is for determining whether or not the number of current effective biological particles is changing compared to a statistical average value of past effective biological particles (precisely, from the current time point to a certain previous time point). The long-term low concentration is considered for the cases of measuring effective biological particles in an already contaminated area. The short-term high concentration is considered for the cases where contaminated materials pass through for a short period of time by the wind or the like in an uncontaminated area.

Determination of whether or not relative concentration alarm criterion is exceeded

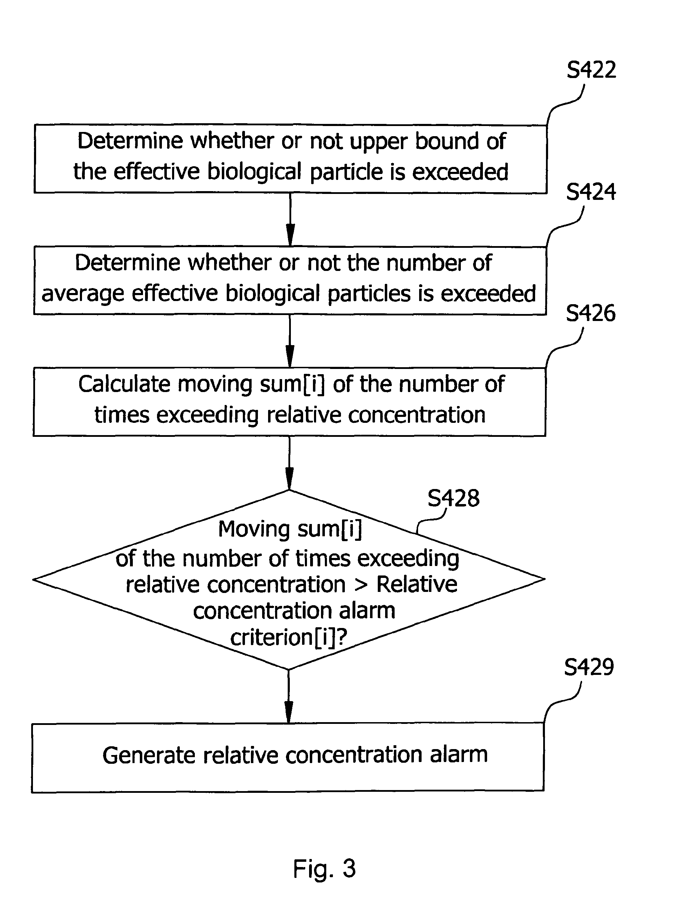

FIG. 3 is a detailed flowchart illustrating the step S420 in FIG. 1 of determining whether or not a relative concentration alarm criterion is exceeded. Hereinafter, the step of determining whether or not a relative concentration alarm criterion is exceeded in the present invention will be described with reference to FIG. 3.

Whether or not a relative concentration alarm criterion is exceeded is determined for two sections into which acquired data are classified depending on the number C of data as follows:

(1) C<26

It is determined that the relative concentration alarm criterion is not exceeded.

(2) C≥26

In step S422, it is checked whether or not the effective biological particle[i] calculated in step S280 is larger than the upper bound[i-1] of the effective biological particle calculated in step S290. If the effective biological particle[i] is larger than the upper bound[i-1] of the effective biological particle, it is determined that the upper bound of the effective biological particle is exceeded.

If the average effective biological particle[i] calculated in step S290 is larger than 1, it is determined in step S424 that the number of average effective biological particles is exceeded.

In step S426, a moving sum[i] of the number of times exceeding a relative concentration is calculated. If it is determined that the upper bound of the effective biological particle is exceeded in step S422 and the number of the average effective biological particles is exceeded in step S424, it is determined that the relative concentration is exceeded, and the moving sum[i] of the number of times exceeding a relative concentration is calculated. In the embodiment, a 20-second moving sum[i] of the number of times exceeding the relative concentration is used for determining whether or not the relative concentration alarm criterion is exceeded.

Subsequently, it is determined whether or not the relative concentration alarm criterion is exceeded S428.

Whether or not the relative concentration alarm criterion is exceeded is determined by comparing the moving sum[i] of the number of times exceeding the relative concentration calculated in step S426 with a relative concentration alarm criterion[i] described below. If the moving sum[i] of the number of times exceeding the relative concentration is equal to or larger than the relative concentration alarm criterion[i], a relative concentration alarm signal is generated in step S429.

Calculation of relative concentration alarm criterion

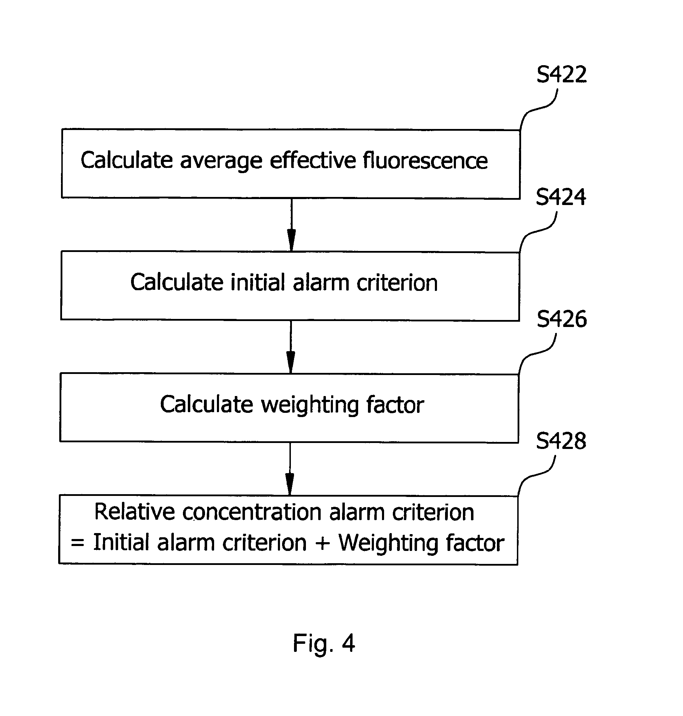

FIG. 4 is a flowchart illustrating the steps of calculating a relative concentration alarm criterion described above. Hereinafter, the relative concentration alarm criterion[i] according to an embodiment of the present invention will be described with reference to FIG. 4.

In order to set the relative concentration alarm criterion[i], average effective fluorescence is calculated first in step S422. Then, an initial alarm criterion is set using the average effective fluorescence in step S424, and weighting factors such as an effective scattering weighting factor, a fluorescence distribution weighting factor, a wind direction weighting factor, and a wind speed weighting factor are determined in step S426 based on effective scattering, fluorescence distribution, changes in wind speed, and changes in wind direction. In steps S426, an operational situation weighting factor related to an operational situation is also determined if needed. The relative concentration alarm criterion is set in step S428 by adding the initial alarm criterion and the weighting factors calculated like the above. Hereinafter, this will be described in detail.

First, in step S422, the average effective fluorescence[i] is calculated for four sections into which the data acquired from the particle monitor are classified depending on the number C of data, (1) C≤7, (2) 7<C≤60, (3) 60<C≤120, and (4) C>120.

(1) When C<7

The average effective fluorescence[i] is defined as zero.

(2) When 7<C≤60

The average effective fluorescence[i] in section (2) is defined as an average of all previous effective fluorescence[i] at the current time point (i).

Average effective fluorescence[i] = {effective fluorescence[i] + ---- + effective fluorescence[1]}/i

(3) When 60<C≤120

The average effective fluorescence[i] in section (3) is defined as the average effective fluorescence[59] at 59 seconds.

Average effective fluorescence[i] = average effective fluorescence [59]

(4) When C>120

If an alarm is not generated within 120 seconds from the current time point, a 60-second moving average is taken as the average effective fluorescence[i] at a time point 60 seconds before the current time point (i).

Average effective fluorescence[i] = {effective fluorescence[i-120] + ---- + effective fluorescence[i-61]}/60

If an alarm is generated within 120 seconds from the current time point, the average effective fluorescence[t] at the time point[t] where the alarm has been generated is maintained for 120 seconds. At this time, enen if a new alarm is generated, the average effective fluorescence[t] is maintained, and it returns to the average effective fluorescence[i] of the current time point after 120 seconds are passed.

Subsequently, in step S424, an initial alarm criterion[i] is determined by comparing the average effective fluorescence[i] and an initial alarm value. The initial alarm value is preferably provided in plural in order to prevent a false alarm. In the embodiment, there are three initial alarm values (e.g., 0, 5, 10), and corresponding initial alarm criteria are set as shown below. However, this is only for an exemplary purpose, and the present invention is not limited thereto.

(1) Initial alarm criterion[i] - 12 when 0 < average effective fluorescence < 5

(2) Initial alarm criterion[i] = 13 when 6 < average effective fluorescence < 10

(3) Initial alarm criterion[i] = 14 when average effective fluorescence > 10

Meanwhile, since the relative concentration may be affected by external factors such as environmental changes or the like, it is preferable to consider weighting factors corresponding to changes in the external factors into the relative concentration alarm criterion[i]. The weighting factors are computed in step S426. The weighting factors may include an effective scattering weighting factor[i], a fluorescence distribution weighting factor[i], a wind speed change weighting factor[i], a wind direction change weighting factor[i], an operational situation weighting factor[i], and the like. The weighting factor may be set to an appropriate value through try and error or set to a certain value within a meaningful range, and detailed descriptions thereof will be omitted.

In step S428, the relative concentration alarm criterion[i] is calculated using the initial alarm criterion[i] calculated in step S424 and the weighting factors obtained in step S426. In the embodiment, the relative concentration alarm criterion[i] is defined as follows: relative concentration alarm criterion[i] = initial alarm criterion[i] + weighting factor.

Determination of whether or not long-term low concentration alarm criterion is exceeded

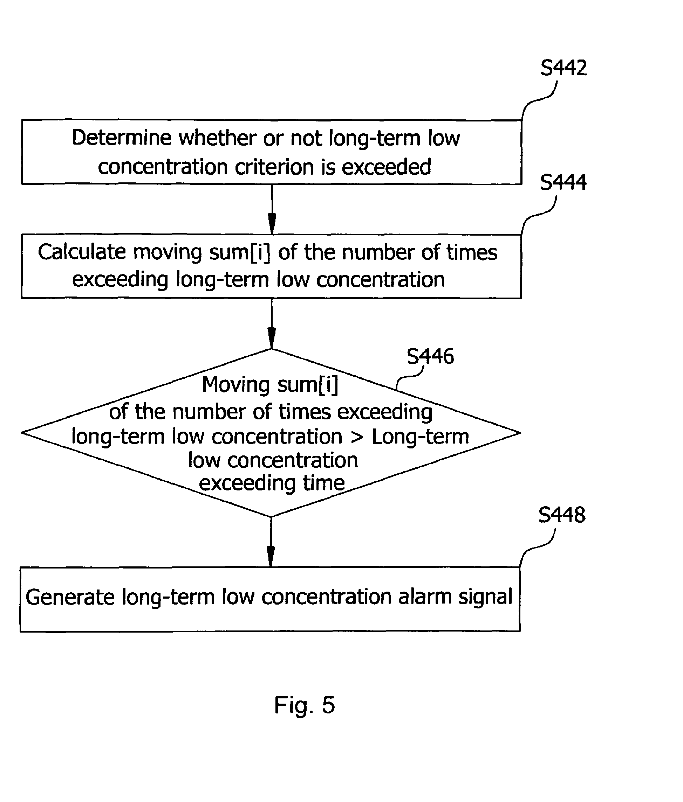

FIG. 5 is a detailed flowchart illustrating the step S440 in FIG. 1 of determining whether or not a long-term low concentration alarm criterion is exceeded. Hereinafter, the step of determining whether or not a long-term low concentration alarm criterion is exceeded according to an embodiment of the present invention will be described with reference to FIG. 5.

Whether or not a long-term low concentration alarm criterion is exceeded is determined for two sections into which acquired data are classified depending on the number C of data, as follows:

(1) C<7

It is determined that the long-term low concentration alarm criterion is not exceeded.

(2) C≥7

First, in step S442 it is determined whether or not the effective biological particle[i] calculated in step S280 exceeds the long-term low concentration criterion of the effective biological particle. The long-term low concentration criterion of the effective biological particle is a user-defined variable, and its value may vary depending on situation.

Subsequently, in step S444, a moving sum[i] of the number of times exceeding a long-term low concentration is calculated by checking the number of times determined as exceeding the long-term low concentration criterion of the effective biological particle.

In step S446, it is confirmed whether or not the moving sum[i] of the number of times exceeding the long-term low concentration is larger than a long-term low concentration exceeding time. If the moving sum[i] of the number of times exceeding the long-term low concentration is the larger, a long-term low concentration alarm signal is generated in step S448. The long-term low concentration exceeding time is a user-defined variable considering a weighting factor for effective scattering.

Determination of whether or not short-term high concentration alarm criterion is exceeded

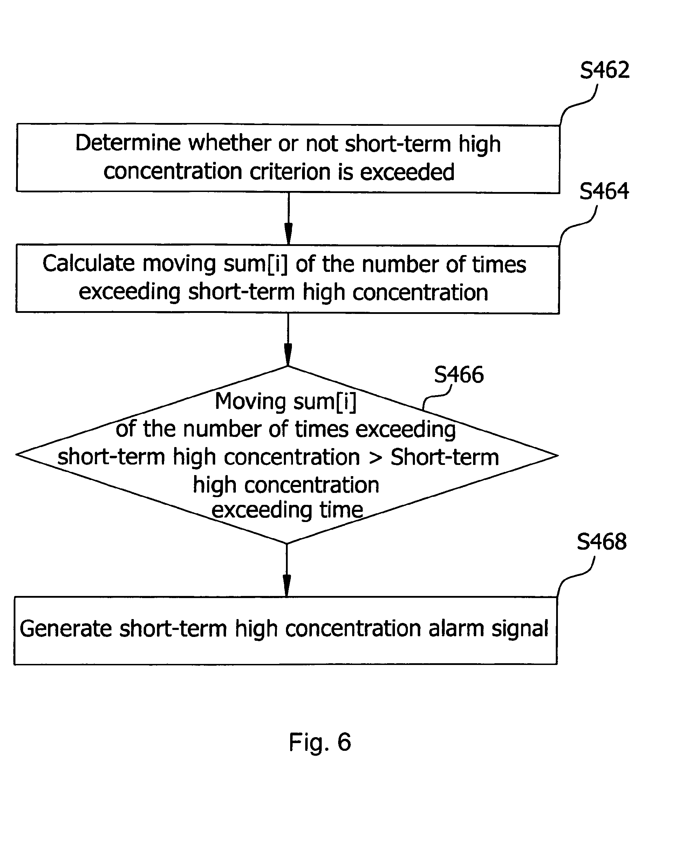

FIG. 6 is a detailed flowchart illustrating the step in FIG. 1 of determining whether or not a short-term high concentration alarm criterion is exceeded. Hereinafter, the step of determining whether or not a short-term high concentration alarm criterion is exceeded according to an embodiment of the present invention will be described with reference to FIG. 6.

Whether or not a short-term high concentration alarm criterion is exceeded is determined for two sections into which acquired data are classified depending on the number C of data.

(1) C<7

It is determined that the short-term high concentration alarm criterion is not exceeded.

(2) C≥7

First, in step S462, it is determined whether or not the effective biological particle[i] calculated in step S280 exceeds the short-term high concentration criterion of the effective biological particle. The short-term high concentration criterion of the effective biological particle is a user-defined variable, and its value may vary depending on situation.

Subsequently, in step S464, a moving sum[i] of the number of times exceeding a short-term high concentration is calculated by checking the number of times determined as exceeding the short-term high concentration criterion of the effective biological particle.

In step 466, it is confirmed whether or not the moving sum[i] of the number of times exceeding the short-term high concentration is larger than a short-term high concentration exceeding time. If the moving sum[i] of the number of times exceeding the short-term high concentration is the larger, a short-term high concentration alarm signal is generated in step S468. The short-term high concentration exceeding time is a user-defined variable considering a weighting factor for effective scattering.

The dynamic alarm generation method of a biological particle monitor according to the present invention considers particle information at a certain time point before the current time point, as well as particle information at the current time point, by adopting the concept of moving sum and moving average, and alarms are classified by concentration of biological particles so as to cope with environmental changes, and thus generation of false alarms can be minimized even when the number of dust particles floating in the air is large or a time variation thereof is high.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A dynamic alarm generation method of a biological particle monitor, the method comprising the steps of:
(a) receiving particle information[i] from the biological particle monitor;
(b) calculating an effective biological particle[i] and an upper bound[i] of the effective biological particle from the particle information[i];
(c) calculating a moving sum[i] of the number of times exceeding a relative concentration, a moving sum[i] of the number of times exceeding a long-term low concentration, and a moving sum[i] of the number of times exceeding a short-term high concentration from the upper bound[i] of the effective biological particle;
(d) determining whether or not the moving sum[i] of the number of times exceeding the relative concentration, the moving sum[i] of the number of times exceeding the long-term low concentration, and the moving sum[i] of the number of times exceeding the short-term high concentration respectively exceed a relative concentration alarm criterion[i], a long-term low concentration exceeding time, and a short-term high concentration exceeding time; and
(e) generating a corresponding alarm if it is determined that any one of the relative concentration alarm criterion[i], the long-term low concentration exceeding time, and the short-term high concentration exceeding time is exceeded,
wherein steps (a) to (e) are repeated every unit time.

2. The method according to claim 1, wherein the particle information includes scattering light, short wavelength fluorescence and long wavelength fluorescence.

3. The method according to claim 1, wherein the effective biological particle[i] is defined as effective fluorescence[i] - effective scattering[i] × average fluorescence index[i], wherein the effective scattering[i] is defined by particles of a certain size or larger among particles detected by the biological particle monitor, the effective fluorescence[i] is defined by effective scattering having short wavelength fluorescence and long wavelength fluorescence of a certain intensity or higher among the effective scattering, and the average fluorescence index[i] is defined as a ratio of the effective fluorescence to the effective scattering.

4. The method according to claim 1, wherein a relative concentration excess[i] is defined as a case where the effective biological particle[i] exceeds the upper bound[i-1] of the effective biological particle and an average effective biological particle[i] is larger than 1.

5. The method according to claim 1, wherein a long-term low concentration excess[i] is defined as a case where the effective biological particle[i] is larger than a long-term low concentration criterion of the effective biological particle.

6. The method according to claim 5, wherein the long-term low concentration criterion of the effective biological particle is a user-defined variable.

7. The method according to claim 1, wherein a short-term high concentration excess[i] is defined as a case where the effective biological particle[i] is larger than a short-term high concentration criterion of the effective biological particle.

8. The method according to claim 7, wherein the short-term high concentration criterion of the effective biological particle is a user-defined variable.

9. The method according to claim 1, wherein the data received in step (a) includes weather information[i] received from meteorological equipment, and weighting factors corresponding to changes in external factors are assigned to the relative concentration alarm criterion[i].
